# EUROPÄISCHE PATENTSCHRIFT

(11) **EP 3 642 498 B1**
(45) Veröffentlichungstag und Bekanntmachung des Hinweises auf die Patenterteilung: **28.07.2021**
(21) Anmeldenummer: 18732276.3
(22) Anmeldetag: 07.06.2018
(51) Int. Cl.: F16C 27/06, F16C 35/077

(54) **WELLENLAGER**
SHAFT BEARING
PALIER D'ARBRE

(30) Priorität: 23.06.2017 DE 102017113999
(43) Veröffentlichungstag der Anmeldung: 29.04.2020
(73) Patentinhaber: Vibracoustic SE, 64293 Darmstadt (DE)
(72) Erfinder: DÜRRE, Markus, 79395 Neuenburg am Rhein (DE); PAUL, Christian, 79424 Auggen (DE)
(74) Vertreter: Patentanwälte Olbricht Buchhold Keulertz
(86) Internationale Anmeldenummer: PCT/EP2018/064965
(87) Internationale Veröffentlichungsnummer: WO 2018/234047

(56) Entgegenhaltungen:
- EP-A2- 0 577 918
- DE-A1- 3 729 275
- JP-A- 2000 192 954
- JP-B2- 3 933 236
- JP-U- S5 617 417
- US-A- 4 722 618

## Beschreibung

Die Erfindung betrifft ein Wellenlager zur Lagerung einer Welle, insbesondere einer Antriebswelle eines Kraftfahrzeugs, aufweisend eine Innenhülse, einen die Innenhülse unter Ausbildung eines Abstands umgebenden Außenkörper und einen Elastomerkörper, der die Innenhülse und den Außenkörper elastisch miteinander verbindet.

Ein Wellenlager der eingangs genannten Art wird zur Lagerung einer Welle, insbesondere einer Antriebswelle, wie beispielsweise einer Kardanwelle, eines Kraftfahrzeug verwendet, um die während des Fahrbetriebs an der Welle auftretenden Schwingungen zu dämpfen und/oder zu isolieren. Ferner dient das Wellenlager dazu, die Welle während des Fahrbetriebs in Position zu halten und axiale Verschiebungen beim Anfahren und Bremsen aufzunehmen und zudem Geräusche, Resonanzfrequenzen und Taumelbewegungen der Welle zu dämpfen und/oder zu isolieren.

Hierzu ist das Wellenlager über die Innenhülse an die Welle gekoppelt, so dass Schwingungen der Antriebswelle in das Wellenlager eingeleitet werden. Dadurch beginnt der Elastomerkörper sich zu verformen und dämpft und/oder isoliert die in das Wellenlager eingeleiteten Schwingungen. Über den Außenkörper erfolgt die Festlegung des Wellenlagers an einem Kraftfahrzeugteil, wie beispielsweise einer Kraftfahrzeugkarosserie oder einem Kraftfahrzeugboden.

Für eine optimale Dämpfung und/oder Isolierung der Schwingungen der Welle wird selbige oftmals in wenigstens zwei Segmente unterteilt, da die Biegeeigenform einer einteiligen Welle zu nahe an einer möglichen Drehzahl liegt. Die Segmente werden durch wenigstens ein Wellenlager in Position gehalten und gleichzeitig von der Kraftfahrzeugkarosserie oder dem Kraftfahrzeugboden entkoppelt. Bei der Antriebswelle mit wenigstens zwei Segmenten und wenigstens einem Wellenlager liegen die Biegefrequenzen der Wellensegmente wegen der reduzierten Länge deutlich höher und sind unkritisch.

Das Schwingsystem weist jedoch eine Knickeigenform entsprechend der Masseträgheiten und dynamischen Steifigkeit des Wellenlagers auf, welche bei niedriger Geschwindigkeit durchfahren wird. Die Frequenz des Schwingsystems wird mittels der Steifigkeit des Wellenlagers eingestellt und die Resonanzüberhöhung durch Materialdämpfung des verwendeten Elastomers.

Der Frequenzbereich für die Knickeigenform liegt üblicherweise im Bereich zwischen ca. 20 Hz und ca. 30 Hz. Da die Massenträgheit der Welle durch die Drehmomentübertragung vorgegeben ist, wird die Frequenz der Knickeigenform mehrheitlich durch die dynamische Steifigkeit des Wellenlagers eingestellt.

Daraus ergibt sich eine Mindestanforderung an die Steifigkeit des Wellenlagers, welche in einem eingeschränkten radialen Bauraum erfüllt werden muss. Zudem werden bei modernen Triebsträngen hohe Anforderungen an den Axialausgleich von bis zu ± 20 mm gestellt. Die hohe Radialsteifigkeit muss während des gesamten Axialausgleichs erhalten bleiben und darf nicht signifikant einbrechen.

JP 3-933236 B2 offenbart eine Lageranordnung für eine Welle. Diese umfasst ein Wälzlager, welches auf die Welle montiert ist. Das Wälzlager ist von einer ringförmigen Stützeinheit radial umgeben, welche einen Innenring, ein Gummielement und einen Außenring aufweist. Das Gummielement bildet eine Falte aus.

JP S56-17417 U zeigt eine Welle mit einem Wälzlager. Das Wälzlager ist in einer Innenhülse aufgenommen, welche mit einem Elastomerkörper verbunden ist. Der Elastomerkörper ist radial außen an zwei Ringelementen befestigt, welche wiederum in einem Außenring aufgenommen sind. Der Elastomerkörper bildet eine Falte aus.

Aus US 4,722,618 A ist eine in einer ringförmigen Spange aufgenommene Anordnung mit einer Welle, einem Wälzläger, einem Innenrohr und einem Außenrohr bekannt. Eine aus einem Elastomer bestehende Isoliervorrichtung, welche eine Falte ausbildet, ist zwischen dem Innenrohr und dem Außenrohr angeordnet.

Der vorliegenden Erfindung liegt die Aufgabe zugrunde, ein Wellenlager zu schaffen, das eine verbesserte Steifigkeit aufweist.

Zur Lösung der Aufgabe wird ein Wellenlager mit den Merkmalen des Anspruchs 1 vorgeschlagen.

Vorteilhafte Ausgestaltungen des Wellenlagers sind Gegenstand der abhängigen Ansprüche.

Ein Wellenlager zur Lagerung einer Welle, insbesondere einer Antriebswelle, eines Kraftfahrzeugs weist eine Innenhülse, einen die Innenhülse unter Ausbildung eines Abstands umgebenden Außenkörper und einen Elastomerkörper auf, der die Innenhülse und den Außenkörper elastisch miteinander verbindet, wobei die Innenhülse eine dem Elastomerkörper zugewandte erste Abrollfläche aufweist, an der ein erster Abrollabschnitt des Elastomerkörpers anliegt, wobei der Außenkörper eine dem Elastomerkörper zugewandte zweite Abrollfläche aufweist, an der ein zweiter Abrollabschnitt des Elastomerkörpers anliegt, wobei die beiden Abrollabschnitte über eine Falte miteinander verbunden sind, die eine freie Länge aufweist, und wobei die beiden Abrollabschnitte permanent an den Abrollflächen anliegen, sodass bei einer Relativbewegung von Innenhülse zu Außenkörper und/oder Außenkörper zu Innenhülse beide Abrollabschnitte an den ihnen zugewandten Abrollflächen die gleiche Wegstrecke abrollen und die freie Länge der Falte unverändert bleibt.

Unter der freien Länge der Falte wird vorliegend die Länge der radialen Außenfläche beziehungsweise des radial außenliegenden Bogenbereichs der Falte des Elastomerkörpers verstanden, die während einer Relativbewegung von Innenhülse zu Außenkörper und/oder Außenkörper zu Innenhülse an keiner Gegenfläche anliegt und somit frei ist. Unter der anliegenden Länge des Elastomerkörpers wird vorliegend diejenige Länge der Fläche des Elastomerkörpers verstanden, die den Abrollflächen zugewandt sind und an selbigen anliegen. Die Falte des Elastomerkörpers kann vorliegend auch als Rollfalte bezeichnet werden.

Es ist erkannt worden, dass durch die Abrollfläche an dem Außenkörper und der Abrollfläche an der Innenhülse die Steifigkeit, insbesondere die Radialsteifigkeit, des Wellenlagers auf einem gleichbleibend hohen Niveau gehalten werden kann, da immer nur der freie Bogenbereich der Falte zwischen Innenhülse und Außenkörper die Steifigkeit bestimmt und dieser in seiner Länge unverändert gleich kurz bleibt. Folglich verändert sich die anliegende Länge des Elastomerkörpers bei einer Relativbewegung von Innenhülse und Außenkörper aufgrund der gleichen Wegstrecke, die die beiden Abrollabschnitte abrollen, nicht. Vielmehr ändert sich bei einer Relativbewegung von Innenhülse und Außenkörper die anliegende Länge des Elastomerkörpers an der ersten Abrollfläche und der zweiten Abrollfläche um den gleichen Betrag, so dass die freie Länge der Falte unverändert bleibt. Somit gewährleistet die Innen- und Außenführung des Elastomerkörpers vorteilhaft eine konstante Steifigkeit, insbesondere Radialsteifigkeit, des Wellenlagers während einer Relativbewegung von Innenhülse und Außenkörper, insbesondere während einer Axialauslenkung von Innenhülse und Außenkörper. Unter Axialauslenkung wird vorliegend eine Auslenkung von Innenhülse und/oder Außenkörper in Längsrichtung des Wellenlagers verstanden.

Die stets unverändert bleibende freie, kurze Länge der Falte sorgt neben der hohen Radialsteifigkeit auch für eine hohe Frequenz der radialen flexiblen Eigenform mit Steifigkeitspeak. Ab einer Frequenz von ca. 400 Hz bis ca. 600 Hz ist diese Eigenform mangels Anregung nicht mehr relevant. Durch die beiden Abrollflächen können sich die Abrollabschnitte permanent an die Innenhülse und den Außenkörper anlegen, wodurch die Rollfalte gezwungen wird, eine saubere Abrollbewegung durchzuführen. Dadurch wird verhindert, dass die Falte einknickt, so dass lokal hohe Belastungen vermieden werden.

Ferner, da beide Abrollabschnitte permanent an den Abrollflächen anliegen, wird die Einhaltung des kleinsten zulässigen Biegeradius der Falte garantiert, so dass bei einer Dauerbelastung die Falte nicht beschädigt wird.

Der Elastomerkörper des Wellenlagers weist vorteilhaft einen ersten Schenkel und einen zweiten Schenkel auf, die über die Falte elastische miteinander verbunden sind. Bevorzugt liegt der erste Schenkel an der Innenhülse und der zweite Schenkel liegt an dem Außenkörper an. In einer vorteilhaften Ausgestaltung weist der erste Schenkel die erste Abrollfläche und der zweite Schenkel weist die zweite Abrollfläche auf. Vorteilhaft ragt der zweite Schenkel nach der Vulkanisation des Elastomerkörpers in einem Winkel von dem ersten Schenkel ab, so dass der Elastomerkörper beim Einsetzen, insbesondere Einpressen, in eine Aufnahmeöffnung des Außenkörpers mit Vorspannung an dem Außenkörper und damit permanent an der zweiten Abrollfläche anliegt. Nach dem Einsetzten des Elastomerkörpers sind beide Schenkel vorteilhaft parallel zueinander ausgerichtet.

Der Außenkörper kann als eine Hülse oder ein Ring ausgebildet sein. Wenn der Außenkörper eine Hülse oder ein Ring ist, dann wird der Außenkörper in einen Lagerträger eingesetzt, insbesondere eingepresst. Über den Lagerträger erfolgt die Befestigung des Wellenlagers an einem Kraftfahrzeugteil, wie beispielsweise einer Kraftfahrzeugkarosserie oder einem Kraftfahrzeugboden. Ferner kann der Außenkörper ein Lagerträger sein. Der Außenkörper kann aus Metall oder einem Kunststoff, insbesondere einem faserverstärktem Kunststoff sein.

Die Innenhülse bildet die erste Abrollfläche für den Elastomerkörper, insbesondere den ersten Abrollabschnitt. Die Innenhülse selbst kann die erste Abrollfläche bilden, indem die Innenhülse entsprechend geformt, insbesondere in Längsrichtung in die Länge gezogen ist, und kalibriert ist. Ferner kann die Innenhülse ein weiteres Element aufweisen, das die erste Abrollfläche ausbildet und das mit der Innenhülse verbunden ist. Die Innenhülse kann aus Metall oder einem Kunststoff, insbesondere einem faserverstärktem Kunststoff sein.

Das Wellenlager kann ferner ein Wälzlager aufweisen, das in eine von der Innenhülse gebildete Aufnahmeöffnung eingepresst ist. Das Wälzlager umfängt die zu lagernde Welle.

In einer vorteilhaften Ausgestaltung beträgt das Verhältnis von anliegender Länge des Elastomerkörpers zur freien Länge der Falte ca. 2/1. Dadurch ist die freie Länge der Falte, die die Steifigkeit, insbesondere die Radialsteifigkeit bestimmt, kurz ausgebildet, so dass das Wellenlager eine hohe Radialsteifigkeit aufweist. Gleichzeitig verschiebt sich durch die kurze, freie Länge der Falte deren radiale flexible Eigenform mit Steifigkeitspeak zu hohen Frequenzen, die mangels Anregung nicht mehr relevant sind.

In einer vorteilhaften Ausgestaltung weist die Innenhülse einen Fortsatz auf, der die erste Abrollfläche bildet. Der Fortsatz bildet vorteilhaft eine Verlängerung der Innenhülse in Längsrichtung des Wellenlagers, so dass der Elastomerkörper, insbesondere der erste Schenkel, permanent an dem Fortsatz anliegen und abrollen kann. Dadurch ist die Falte gezwungen, eine saubere Abrollbewegung durchzuführen. Der Fortsatz kann einstückig mit der Innenhülse verbunden sein oder als ein separates Element ausgebildet sein, welches mit der Innenhülse verbunden ist. Ferner kann der Fortsatz einteilig oder mehrteilig ausgebildet sein. Vorteilhaft weist die Innenhülse einen Absatz auf, mit dem der Fortsatz verbunden ist. Wenn die Innenhülse in den Elastomerkörper einvulkanisiert ist, ragt der Fortsatz vorteilhaft aus dem Elastomerkörper heraus, so dass der Fortsatz mit dem Absatz verbunden werden kann. Vorteilhaft ist der Durchmesser des Absatzes geringer als der die Aufnahmeöffnung zur Aufnahme eines Wälzlagers bildende Durchmesser der Innenhülse. Darüber hinaus kann der Fortsatz, insbesondere dessen Außenumfangsfläche, mit einer Konturierung versehen sein, um die gleichbleibend hohe Radialsteifigkeit optimal einzustellen. Der Fortsatz kann aus Metall oder aus Kunststoff, insbesondere faserverstärktem Kunststoff, hergestellt sein. Zur Aufnahme der beim Abrollen des Elastomerkörpers auf den Fortsatz wirkenden Kräfte kann der Fortsatz im Vergleich zu der Innenhülse dicker ausgebildet sein. Bevorzugt ist ein freies Ende des Fortsatzes umgebogen, insbesondere radial einwärts umgebogen. Dadurch wird der Elastomerkörper während der Abrollbewegung nicht beschädigt.

In einer vorteilhaften Ausgestaltung ist der Fortsatz ein Ringelement. Ein Ringelement ist einfach und kostengünstig in der Herstellung. Ferner kann über die Breite und/oder Kontur des Ringelements auf einfache und kostengünstige Weise die Länge der Abrollfläche für den ersten Abrollabschnitt eingestellt werden.

In einer vorteilhaften Ausgestaltung ist der Fortsatz formschlüssig, kraftschlüssig und/oder stoffschlüssig mit der Innenhülse verbunden. So kann der Fortsatz auf die Innenhülse aufgepresst sein. Insbesondere ist der Fortsatz auf einen Absatz der Innenhülse aufgepresst. Ferner kann der Fortsatz mit der Innenhülse verlötet, verschweißt und/oder verklebt sein.

In einer vorteilhaften Ausgestaltung ist die erste Abrollfläche und/oder die zweite Abrollfläche konturiert. Mittels einer Konturierung der ersten Abrollfläche und/oder der zweiten Abrollfläche kann eine gleichbleibend hohe Radialsteifigkeit eingestellt werden, so dass die Akustik im Fahrzeug auch unter extremen Auslenkbewegungen der Innenhülse und des Außenkörpers optimal eingestellt bleiben. Die Konturierung kann als eine in die Innenhülse und/oder dem Außenkörper eingebrachte Ausnehmung oder Vertiefung ausgebildet sein.

In einer vorteilhaften Ausgestaltung ist die Innenhülse und/oder der Außenkörper einteilig oder mehrteilig ausgebildet. Vorteilhaft sind die mehreren Teile der Innenhülse und/oder des Außenkörpers formschlüssig, kraftschlüssig und/oder stoffschlüssig miteinander verbunden. Bevorzugt sind die mehreren Teile miteinander verpresst.

In einer vorteilhaften Ausgestaltung ist die Innenhülse und/oder der Außenkörper formschlüssig, kraftschlüssig und/oder stoffschlüssig mit dem Elastomerkörper verbunden. So kann die Innenhülse in den Elastomerkörper einvulkanisiert sein.

Der Elastomerkörper ist vorteilhaft in eine Aufnahmeöffnung des Außenkörpers eingepresst. Ferner kann der Außenkörper in den Elastomerkörper einvulkanisiert sein.

In einer vorteilhaften Ausgestaltung weist der Elastomerkörper einen Befestigungsabschnitt zum Befestigen des Elastomerkörpers an dem Außenkörper auf. Der Befestigungsabschnitt kann eine in den Elastomerkörper eingebrachte, umlaufende Vertiefung aufweisen, in die ein am Außenkörper abragender Vorsprung eingreift. Ferner kann der Befestigungsabschnitt einen Bundabschnitt aufweisen, der an einer Stirnfläche des Außenkörpers anliegt.

In einer vorteilhaften Ausgestaltung ist der Befestigungsabschnitt mittels eines Sicherungsrings an dem Außenkörper festgelegt. Der Sicherungsring dient zur Sicherung des Elastomerkörpers und verhindert ein Herausziehen des Elastomerkörpers aus der Aufnahmeöffnung des Außenkörpers. Weiterhin vorteilhaft kann der Sicherungsring einen ersten Befestigungsschenkel und einen zweiten Befestigungsschenkel aufweisen, die zueinander einen Winkel einschließen. Vorteilhaft liegt der erste Befestigungsschenkel an dem Bundabschnitt an und der zweite Befestigungsschenkel liegt an dem Elastomerkörper im Bereich der Vertiefung an. Ferner weist der zweite Befestigungsschenkel einen umgebogenen Endabschnitt auf, der zum Hintergreifen des von dem Außenkörper abragenden Vorsprungs ausgebildet ist. Der Sicherungsring kann als Sprengring ausgebildet sein. Vorteilhaft wird der Sicherungsring auf den Befestigungsabschnitt aufgepresst, um den Elastomerkörper an dem Außenkörper festzulegen.

Nachfolgend werden ein Wellenlager sowie weitere Merkmale und Vorteile anhand eines Ausführungsbeispiels näher erläutert, das in den Figuren schematisch dargestellt ist. Hierbei zeigen:
- Figur 1: einen Querschnitt durch einen Elastomerkörper mit einer einvulkanisierten Innenhülse nach dessen Vulkanisation;
- Figur 2: einen Querschnitt durch ein Wellenlager;
- Figur 3: einen Querschnitt durch das Wellenlager, wobei die Innenhülse relativ zu einem Außenkörper nach links oben verschoben ist; und
- Figur 4: einen Querschnitt durch das Wellenlager, wobei die Innenhülse relativ zu dem Außenkörper nach rechts oben ausgelenkt ist.

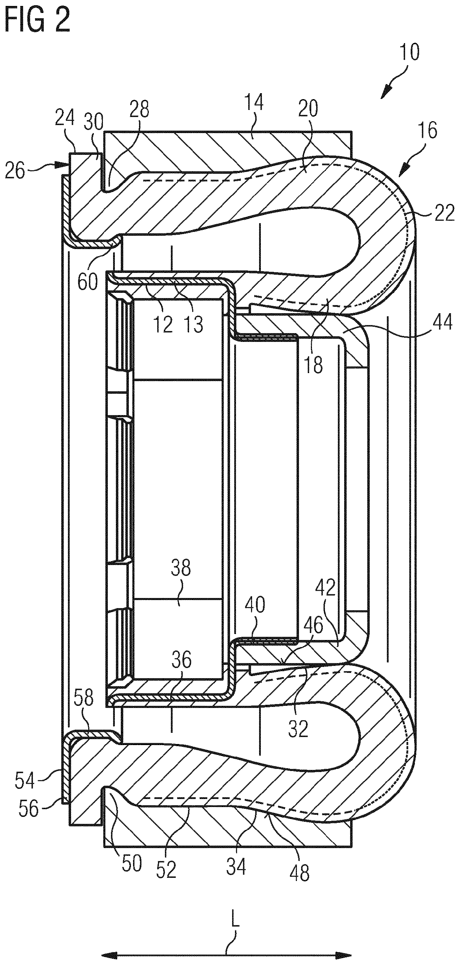

In den Figuren 2 bis 4 ist ein Wellenlager 10 gezeigt, das zur Lagerung einer nicht dargestellten Welle, insbesondere einer Antriebswelle, wie beispielsweise einer Kardanwelle, an einem nicht dargestellten Kraftfahrzeugteil, wie beispielsweise einer Kraftfahrzeugkarosserie oder einem Kraftfahrzeugboden, dient.

Das Wellenlager weist eine Innenhülse 12, einen die Innenhülse 12 unter Ausbildung eines Abstands umgebenden Außenkörper 14 und einen Elastomerkörper 16 auf, der die Innenhülse 12 und den Außenkörper 14 elastisch miteinander verbindet.

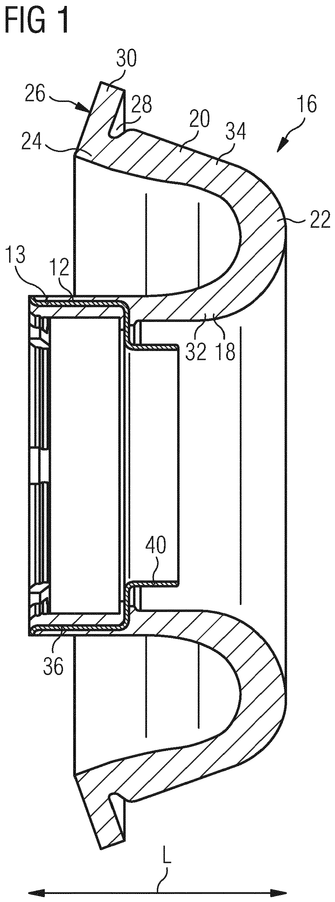

In Figur 1 ist der Elastomerkörper 16 nach dessen Vulkanisation gezeigt. Der Elastomerkörper 16 weist einen ersten Schenkel 18, einen zweiten Schenkel 20 und eine die beiden Schenkel 18, 20 miteinander verbindende Falte 22 auf. In dem ersten Schenkel 18 ist die Innenhülse 12, insbesondere ein Aufnahmeabschnittabschnitt 13 der Innenhülse 12, stoffschlüssig einvulkanisiert. Der zweite Schenkel 20 weist an einem freien Ende 24 einen Befestigungsabschnitt 26 auf, der eine umlaufende Vertiefung 28 und einen Bundabschnitt 30 umfasst. Über den Befestigungsabschnitt 26 erfolgt die Befestigung des Elastomerkörpers 16 an dem Außenkörper 14. Ferner weist der erste Schenkel 18 einen ersten Abrollabschnitt 32 und der zweite Schenkel 20 einen zweiten Abrollabschnitt 34 auf, deren Funktionen im Folgenden noch näher erläutert werden.

Der Aufnahmeabschnitt 13 der Innenhülse 12 bildet eine Aufnahmeöffnung 36 zum Einpressen eines in den Figuren 2 bis 4 schematisch dargestellten Wälzlagers 38. Über das Wälzlager 38 wird das Wellenlager 10 an einer nicht dargestellten Welle gelagert. An den Aufnahmeabschnitt 13 schließt sich ein Absatz 40 an, der einen kleineren Durchmesser als der Aufnahmeabschnitt 13 aufweist, wobei der Absatz 40 aus dem Elastomerkörper 16 herausragt.

An dem Absatz 40 ist ein Fortsatz 42, der als ein Ringelement 44 ausgebildet ist, festgelegt, wobei der Fortsatz 42 auf den Absatz 40 aufgepresst ist. Der Fortsatz 42 weist eine erste Abrollfläche 46 auf, die dem ersten Abrollabschnitt 32 zugewandt ist, wie in den Figuren 2 bis 4 dargestellt ist. An seinem freien Ende ist der Fortsatz 42 radial einwärts umgebogen. Die Innenhülse 12 und der Fortsatz 42 können aus Metall oder Kunststoff, insbesondere faserverstärkten Kunststoff, hergestellt sein. Wie in den Figuren 2 bis 4 ferner ersichtlich ist, ist der Fortsatz 42 vorliegend dicker als die Innenhülse 12. Der Fortsatz kann auch die gleiche Dicke wie die Innenhülse 12 aufweisen. Ferner kann die Innenhülse 12 selbst die erste Abrollfläche 46 bilden, indem die Innenhülse 12 in Längsrichtung L des Wellenlagers 10, insbesondere der Absatz 40, verlängert wird.

Der Außenkörper 14 ist vorliegend eine Hülse oder ein Ringelement und aus Metall oder Kunstsoff, insbesondere faserverstärktem Kunststoff, hergestellt. Der Außenkörper 14 wird in einen nicht dargestellten Lagerträger eingesetzt, insbesondere eingepresst, um das Wellenlager 10 an einem nicht dargestellten Kraftfahrzeugteil, wie beispielsweise einer Kraftfahrzeugkarosserie oder einem Kraftfahrzeugboden.

Der Außenkörper 14 weist eine dem zweiten Abrollabschnitt 34 zugewandte zweite Abrollfläche 48 auf. Die zweite Abrollfläche 48 ist konturiert ausgebildet, wodurch der Elastomerkörper 16, insbesondere der zweite Abrollabschnitt 34 permanent an dem Außenkörper 14 anliegt. Der Außenkörper 14 weist ferner einen radial einwärts abragenden Vorsprung 50 auf, der in die umlaufende Vertiefung 28 eingreifen kann.

Zur Befestigung des Elastomerkörpers 16 an dem Außenkörper 14 wird zunächst der zweite Schenkel 20 zusammengedrückt und der Elastomerkörper 16 wird derart in die Öffnung 52 des Außenkörpers 14 eingesetzt, dass der Vorsprung 50 in die umlaufende Vertiefung 28 eingreift und der Bundabschnitt 30 an einer Stirnseite des Außenkörpers 14 anliegt.

Zur Sicherung des Elastomerkörpers 16 vor einem Herausziehen des Elastomerkörpers 16 aus der Öffnung 52 des Außenkörpers 14 wird ein Sicherungsring 54 auf den Befestigungsabschnitt 26 aufgepresst. Der Sicherungsring 54 weist einen ersten Befestigungsschenkel 56 und einen zweiten Befestigungsschenkel 58 auf, die zueinander einen Winkel einschließen. Der erste Befestigungsschenkel 56 liegt an dem Bundabschnitt 30 an und der zweite Befestigungsschenkel 58 liegt an dem Elastomerkörper 16 im Bereich der Vertiefung 28 an. Ferner weist der zweite Befestigungsschenkel 28 einen umgebogenen Endabschnitt 60 auf, der zum Hintergreifen des Vorsprungs 50 dient.

Der Elastomerkörper 16, insbesondere die beiden Schenkel 18, 20 und die dazugehörigen Abrollabschnitte 32, 34, liegen mit Vorspannung an dem Außenkörper 14 und dem Fortsatz 42, insbesondere an den Abrollflächen 46, 48, an. Durch die Vorspannung liegt der erste Abrollabschnitt 32 permanent an der ersten Abrollfläche 46 und der zweite Abrollabschnitt 34 permanent an der zweiten Abrollfläche 48 an.

Wie in Figur 2 ersichtlich ist, beträgt das Verhältnis von anliegender Länge (ist in den Figuren 2 bis 4 gestrichelt dargestellt) der Abrollabschnitte 32, 34, welche derjenige Länge der Fläche des Elastomerkörpers 16 entspricht, die an dem Außenkörper 14 und dem Fortsatz 42 anliegt, zu der freien Länge der Falte 22 (ist in den Figuren 2 bis 4 punktiert dargestellt), welche derjenigen Länge des freien Bogenbereichs der Falte 22 entspricht, die weder an dem Außenkörper 14 noch an dem Fortsatz 42 anliegt, ca. 2/1. Die freie Länge der Falte 22 ist dadurch sehr kurz.

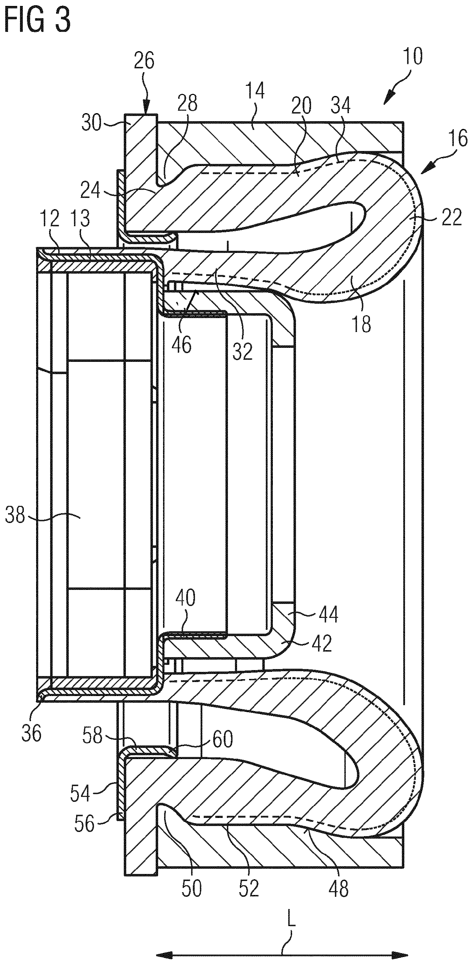

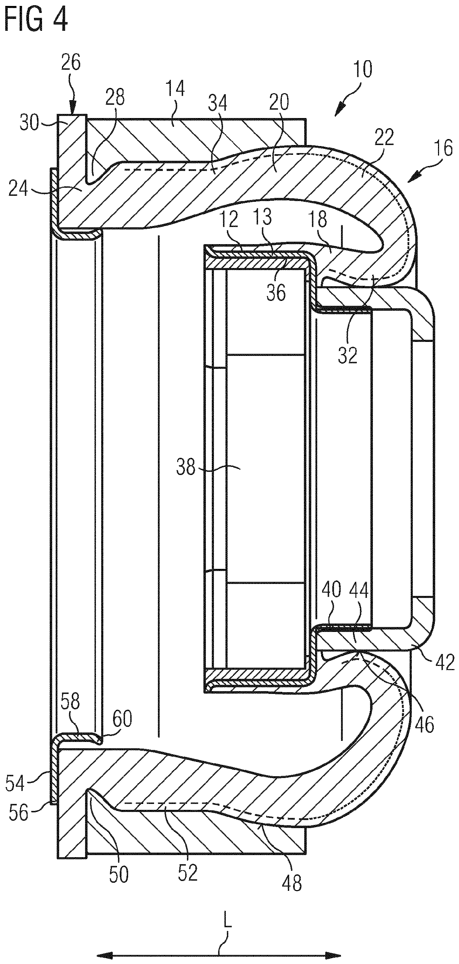

Bei einer Relativbewegung der Innenhülse 12 zu dem Außenkörper 14, wie dies in den Figuren 3 und 4 dargestellt ist, rollen die Abrollabschnitte 32, 34, an den ihnen zugewandten Abrollflächen 46, 48 ab. Insbesondere rollen die beiden Abrollabschnitte 32, 34 die gleiche Wegstrecke an den ihnen zugewandten Abrollflächen 46, 48 ab, so dass die freie Länge der Falte 22 unverändert bleibt. Durch die Führung des Elastomerkörpers 16 innen und außen wird die Falte 22 gezwungen, eine saubere Abrollbewegung durchzuführen. Dadurch wird verhindert, dass die Falte 22 einknickt und lokal hohe Belastungen entstehen. Folglich kann das Wellenlager 10 eine hohe Radialsteifigkeit auf einem gleichbleibend hohen Niveau halten, da immer nur der freie Bogenbereich der Falte 22 zwischen der Innenhülse 12 und dem Außenkörper 14 die Steifigkeit bestimmt und dieser in seiner Länge unverändert bleibt. Durch die kurze freie Länge der Falte 22 verschiebt sich die radial flexible Eigenform mit Steifigkeitspeak hin zu hohen Frequenzen, die mangels Anregung nicht mehr relevant sind.

### Bezugszeichenliste

- 10: Wellenlager
- 12: Innenhülse
- 13: Aufnahmeabschnitt
- 14: Außenkörper
- 16: Elastomerkörper
- 18: erster Schenkel
- 20: zweiter Schenkel
- 22: Falte
- 24: freies Ende
- 26: Befestigungsabschnitt
- 28: umlaufende Vertiefung
- 30: Bundabschnitt
- 32: erster Abrollabschnitt
- 34: zweiter Abrollabschnitt
- 36: Aufnahmeöffnung
- 38: Wälzlager
- 40: Absatz
- 42: Fortsatz
- 44: Ringelement
- 46: erste Abrollfläche
- 48: zweite Abrollfläche
- 50: Vorsprung
- 52: Öffnung
- 54: Sicherungsring
- 56: erster Befestigungsschenkel
- 58: zweiter Befestigungsschenkel
- 60: umgebogener Endabschnitt

- L: Längsrichtung

## Patentansprüche

1. Wellenlager (10) zur Lagerung einer Welle eines Kraftfahrzeugs, aufweisend eine Innenhülse (12), einen die Innenhülse (12) unter Ausbildung eines Abstandes umgebenden Außenkörper (14) und einen Elastomerkörper (16), der die Innenhülse (12) und den Außenkörper (14) elastisch miteinander verbindet, wobei die Innenhülse (12) eine dem Elastomerkörper (16) zugewandte erste Abrollfläche (46) aufweist, an der ein erster Abrollabschnitt (32) des Elastomerkörpers (16) anliegt, wobei der Außenkörper (14) eine dem Elastomerkörper (16) zugewandte zweite Abrollfläche (48) aufweist, an der ein zweiter Abrollabschnitt (34) des Elastomerkörpers (16) anliegt, wobei die beiden Abrollabschnitte (32, 34) über eine Falte (22) miteinander verbunden sind, die eine freie Länge aufweist, und wobei die beiden Abrollabschnitte (32, 34) permanent an den Abrollflächen (46, 48) anliegen, sodass bei einer Relativbewegung von Innenhülse (12) zu Außenkörper (14) und/oder Außenkörper (14) zu Innenhülse (12) beide Abrollabschnitte (32, 34) an den ihnen zugewandten Abrollflächen (46, 48) die gleiche Wegstrecke abrollen und die freie Länge der Falte (22) unverändert bleibt.

2. Wellenlager (10) nach Anspruch 1, **dadurch gekennzeichnet, dass** das Verhältnis von anliegender Länge des Elastomerkörpers (16) zur freien Länge der Falte (22) ca. 2/1 beträgt.

3. Wellenlager (10) nach Anspruch 1 oder 2, **dadurch gekennzeichnet, dass** die Innenhülse (12) einen Fortsatz (42) aufweist, der die erste Abrollfläche (46) bildet.

4. Wellenlager (10) nach Anspruch 3, **dadurch gekennzeichnet, dass** der Fortsatz (42) ein Ringelement (44) ist.

5. Wellenlager (10) nach Anspruch 3 oder 4, **dadurch gekennzeichnet, dass** der Fortsatz (42) formschlüssig, kraftschlüssig und/oder stoffschlüssig mit der Innenhülse (12) verbunden ist.

6. Wellenlager (10) nach einem der vorhergehenden Ansprüche, **dadurch gekennzeichnet, dass** die erste Abrollfläche(46) und/oder die zweite Abrollfläche (48) konturiert ist.

7. Wellenlager (10) nach einem der vorhergehenden Ansprüche, **dadurch gekennzeichnet, dass** die Innenhülse (12) und/oder der Außenkörper (14) einteilig oder mehrteilig ausgebildet ist.

8. Wellenlager (10) nach einem der vorhergehenden Ansprüche, **dadurch gekennzeichnet, dass** die Innenhülse (12) und/oder der Außenkörper (14) formschlüssig, kraftschlüssig und/oder stoffschlüssig mit dem Elastomerkörper (16) verbunden ist.

9. Wellenlager (10) nach einem der vorhergehenden Ansprüche, **dadurch gekennzeichnet, dass** der Elastomerkörper (16) einen Befestigungsabschnitt (26) zum Befestigen des Elastomerkörpers (16) an dem Außenkörper (14) aufweist.

10. Wellenlager (10) nach Anspruch 9, **dadurch gekennzeichnet, dass** der Befestigungsabschnitt (26) mittels eines Sicherungsringes (54) an dem Außenkörper (14) festgelegt ist.

## Claims

1. Shaft bearing (10) for supporting a shaft of a motor vehicle, comprising an inner sleeve (12), an outer body (14) surrounding the inner sleeve (12) to form a gap, and an elastomer body (16) which elastically connects the inner sleeve (12) and the outer body (14), wherein the inner sleeve (12) has a first rolling surface (46) which faces towards the elastomer body (16) and against which a first rolling section (32) of the elastomer body (16) abuts, wherein the outer body (14) has a second rolling surface (48) which faces towards the elastomer body (16) and against which a second rolling section (34) of the elastomer body (16) abuts, wherein the two rolling sections (32, 34) are connected to each other via a fold (22) which has a free length, and wherein the two rolling sections (32, 34) abut permanently against the rolling surfaces (46, 48) such that during a relative movement of the inner sleeve (12) relative to the outer body (14) and/or of the outer body (14) relative to the inner sleeve (12), both rolling sections (32, 34) roll over the same distance on the rolling surfaces (46, 48) facing them, and that the free length of the fold (22) remains unchanged.

2. Shaft bearing (10) according to claim 1, **characterized in that** the ratio of the adjacent length of the elastomeric body (16) to the free length of the fold (22) is about 2/1.

3. Shaft bearing (10) according to claim 1 or 2, **characterized in that** the inner sleeve (12) has an appendage (42) forming the first rolling surface (46).

4. Shaft bearing (10) according to claim 3, **characterized in that** the appendage (42) is a ring member (44).

5. Shaft bearing (10) according to claim 3 or 4, **characterized in that** the appendage (42) is connected to the inner sleeve (12) positively, non-positively and/or substance-to-substance connection.

6. Shaft bearing (10) according to one of the preceding claims, **characterized in that** the first rolling surface (46) and/or the second rolling surface (48) are contoured.

7. Shaft bearing (10) according to one of the preceding claims, **characterized in that** the inner sleeve (12) and/or the outer body (14) have a single-part or multi-part configuration.

8. Shaft bearing (10) according to one of the preceding claims, **characterized in that** the inner sleeve (12) and/or the outer body (14) are connected to the elastomer body (16) positively, non-positively and/or by substance-to-substance connection.

9. Shaft bearing (10) according to one of the preceding claims, **characterized in that** the elastomer body (16) has a fastening portion (26) for fastening the elastomer body (16) to the outer body (14).

10. Shaft bearing (10) according to claim 9, **characterized in that** the fastening portion (26) is fixed on the outer body (14) via a securing ring (54).

## Revendications

1. Palier d'arbre (10) pour supporter un arbre d'un véhicule à moteur, comprenant un corps intérieur (12), un corps extérieur (14) entourant le corps intérieur (12) pour former un jeu, et un corps élastomère (16) reliant élastiquement le corps intérieur (12) et le corps extérieur (14) l'un à l'autre, dans lequel le corps intérieur (12) a une première surface de roulement (46) faisant face au corps élastomère (16), contre laquelle une première partie de roulement (32) du corps élastomère (16) vient en butée, dans lequel le corps extérieur (14) a une deuxième surface de roulement (48) faisant face au corps élastomère (16) contre laquelle s'appuie une deuxième section de roulement (34) du corps élastomère (16), les deux sections de roulement (32, 34) étant reliées l'une à l'autre par un pli (22) qui a une longueur libre, et les deux sections de roulement (32, 34) butant en permanence contre les surfaces de roulement (46, 48) de sorte que, dans le cas d'un mouvement relatif du corps intérieur (12) vers le corps extérieur (14) et/ou du corps extérieur (14) vers le corps intérieur (12), les deux sections de roulement (32, 34) roulent sur la même distance sur les surfaces de roulement (46, 48) qui leur font face et la longueur libre du pli (22) reste inchangée.

2. Palier d'arbre (10) selon la revendication 1 , **caractérisé en ce que** le rapport entre la longueur adjacente du corps élastomère (16) et la longueur libre du pli (22) est d'environ 2/1.

3. Palier d'arbre (10) selon la revendication 1 ou 2, **caractérisé en ce que** le corps intérieure (12) a une extension (42) qui forme la première surface de roulement (46).

4. Palier d'arbre (10) selon la revendication 3, **caractérisé en ce que** l'extension (42) est un élément annulaire (44).

5. Palier d'arbre (10) selon la revendication 3 ou 4, **caractérisé en ce que** l'extension (42) est reliée de manière positive, non positive et/ou matérielle au corps intérieure (12).

6. Palier d'arbre (10) selon l'une quelconque des revendications précédentes, **caractérisé en ce que** la première surface de roulement (46) et/ou la deuxième surface de roulement (48) est contournée.

7. Palier d'arbre (10) selon l'une des revendications précédentes, **caractérisé en ce que** le corps intérieur (12) et/ou le corps extérieur (14) sont formés en une seule pièce ou en plusieurs pièces.

8. Palier d'arbre (10) selon l'une des revendications précédentes, **caractérisé en ce que** le corps intérieur (12) et/ou le corps extérieur (14) sont reliés au corps élastomère (16) de manière positive, non positive et/ou matérielle.

9. Palier d'arbre (10) selon l'une des revendications précédentes, **caractérisé en ce que** le corps élastomère (16) présente une section de fixation (26) pour fixer le corps élastomère (16) au corps extérieur (14).

10. Palier d'arbre (10) selon la revendication 9, **caractérisé en ce que** la partie de fixation (26) est fixée au corps extérieur (14) au moyen d'un anneau d'arrêt extérieur (54).
